# EUROPEAN PATENT SPECIFICATION

(11) **EP 4 490 905 B1**
(45) Date of publication and mention of the grant of the patent: **21.01.2026**
(21) Application number: 23710648.9
(22) Date of filing: 16.02.2023
(51) Int. Cl.: H04N 5/58, H04N 21/485, H04N 21/431, H04N 21/4223, H04N 21/422, G06F 21/83, G06F 21/62, G09G 5/02, G09G 5/10

(54) **COLOR AND BRIGHTNESS ADJUSTMENT ALGORITHMS**
ALGORITHMEN ZUR FARB- UND HELLIGKEITSEINSTELLUNG
ALGORITHMES DE RÉGLAGE DE COULEUR ET DE LUMINOSITÉ

(30) Priority: 08.03.2022 NL 2031189
(43) Date of publication of application: 15.01.2025
(73) Proprietor: Microsoft Technology Licensing, LLC, Redmond, WA 98052-6399 (US)
(72) Inventor: PUNDAK, Gilad, Redmond, Washington 98052-6399 (US); SPIVAK, Daniel, Redmond, Washington 98052-6399 (US); ARBEL, Eran, Redmond, Washington 98052-6399 (US)
(74) Representative: Murgitroyd & Company
(86) International application number: PCT/US2023/062709
(87) International publication number: WO 2023/172808

(56) References cited:
- US-A1- 2020 105 225
- US-A1- 2021 397 751

## Description

### FIELD

This application relation to adjustment of colour and brightness of content displayed on a computer display.

### BACKGROUND

Ambient light conditions can affect a user's ability to view a computer display and the user's perception of color and brightness of content displayed on the display. In some instances, color adjustment algorithms and brightness adjustment algorithms are used to adjust one or more color parameters of the image and to adjust a luminance of the display, respectively, to account for the ambient light conditions.
Reference is made to the documents US 2021/397751 A1 and US 2020/105225 A1 which have been cited as exemplary of the background state of the art.

### SUMMARY

The scope of the invention is in accordance with the appended claims.

According to one aspect of the present disclosure, a system is provided comprising a display, a first processor, and a second processor. The system further comprises an image sensor configured to output image sensor data to the first processor or the second processor, and an ambient light sensor configured to output ambient light data to the first processor and/or the second processor. A memory stores instructions executable by the first processor to determine whether the image sensor is in use by an application executed at the first processor. On condition that the image sensor is determined not to be in use by the application, the image sensor data is blocked from the first processor. The image sensor data is routed to the second processor to thereby enable the second processor to execute a color adjustment algorithm configured to use at least the image sensor data and the ambient light data to adjust one or more color parameters of content displayed on the display, and to execute a brightness adjustment algorithm configured to use at least the image sensor data and the ambient light data to adjust a luminance of the display.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows an example of a system configured to use image sensor data and ambient light data to execute a color adjustment algorithm and a brightness adjustment algorithm.
FIG. 2 shows a schematic diagram of an example system for routing image sensor data that can be used in the example system of FIG 1.
FIG. 3 shows another schematic diagram of the example system of FIG. 2.
FIG. 4 shows an example image comprising image sensor data that can be used in the example system of FIG. 1.
FIG. 5 shows another example of image sensor data that can be used in the example system of FIG. 1.
FIG. 6 shows yet another example of image sensor data that can be used in the example system of FIG. 1.
FIGS. 7A-7B show a block diagram of an example method for adjusting one or more color parameters of an image displayed on a display and adjusting a luminance of the display.
FIG. 8 shows a block diagram of an example computing system.

### DETAILED DESCRIPTION

Ambient light conditions can affect a user's ability to view a computer display and the user's perception of color and brightness of content, such as images and text, displayed on the display. In some instances, color adjustment algorithms and brightness adjustment algorithms are used to adjust one or more color parameters of the content and to adjust a luminance of the display, respectively, to account for the ambient light conditions.

In some instances, the one or more color parameters and the luminance of the display are adjusted using data from an ambient light sensor, such as an ambient brightness sensor and/or an ambient color sensor. However, raw data output by the ambient light sensor and/or the ambient color sensor can be inaccurate and/or potentially unreliable. In addition, the performance of brightness adjustment algorithms and color adjustment algorithms may vary based upon a type of ambient illumination (e.g., indoor illumination or outdoor illumination) and may further vary based upon a type of light source used (e.g., sunlight or an incandescent lightbulb).

Further, significant error can occur in some usage environments due to low light (e.g., below 100 lux), relatively poor spatial and spectral resolution of ambient light sensors relative to other types of optical sensors (e.g., an image sensor, such as a digital camera sensor), infrared (IR) noise, a non-linear sensor response, and part-to-part variance between sensors. These conditions can impair performance of a display device and adversely affect a user's perception of displayed content and generally degrade the user experience. It can also be challenging to characterize ambient lighting conditions when a combination of light sources are present (also referred to herein as "mixed lighting") due to spectral overlap between different light sources. For example, spectral leakage from an IR source may be detected in a visible spectral range, distorting color and brightness parameters that are calculated based upon visible light intensity.

In some instances, image sensors (e.g., a digital camera sensor, such as a charge-coupled device (CCD) or a complementary metal-oxide-semiconductor (CMOS) sensor) are used to determine ambient lighting conditions. These image sensors have higher spatial and/or spectral resolution and a greater field of view than ambient light sensors (e.g., simple photodiodes), enabling the use of computer vision to determine ambient lighting conditions (e.g., via image classification). Computer vision can extract useful data for color and/or brightness adjustment algorithms, such as the existence of multiple different light sources. However, the use of image sensors may present user privacy concerns, such as the potential for the image sensors to capture private data (e.g., personal identifiable information, financial information, or regulated information) while a user is not aware that the image sensors are operational.

To address these issues, examples are disclosed that relate to detecting whether an image sensor is in use by an application executed at a first processor. On condition that an image sensor is not in use by an application executed at the first processor, the image sensor data is blocked from the first processor, and the image sensor data is routed to a second processor to thereby enable the second processor to use at least the image sensor data and the ambient light data to execute a color adjustment algorithm and a brightness adjustment algorithm. In this manner, the computing device can use a combination of the image sensor data and the ambient light data to accurately determine ambient lighting conditions and display content accordingly, while preventing the first processor from potentially receiving private information from the image sensor data when the image sensor data is not already in use at the first processor.

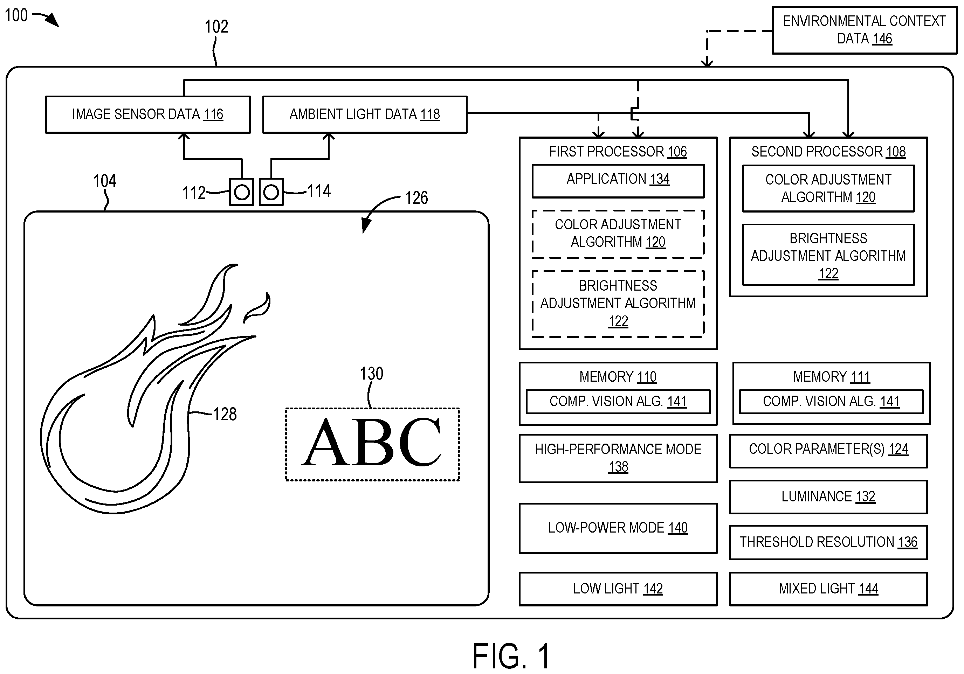

With reference now to FIG. 1, an example of a system 100 is provided for adjusting one or more color parameters of content displayed on a display and adjusting a luminance of the display. The system 100 comprises a computing device 102. In some examples, the computing device 102 comprises a tablet computing device. In other examples, the computing device 102 comprises any other suitable type of computing device. Some examples of other suitable computing devices include, but are not limited to, a smartphone, a laptop computing device, and a desktop computing device.

The computing device 102 comprises a display 104, a first processor 106, and a second processor 108. In some examples, the first processor 106 comprises a central processing unit (CPU) of the computing device 102 or a system on a chip (SoC), and serves as a platform for executing an operating system and other software (e.g., application 134). In some such examples, the second processor 108 comprises an auxiliary processor configured to perform supplementary functions. For example, as described in more detail below and in one potential advantage of the present disclosure, the second processor 108 is configured to receive and process image sensor data while this data is blocked from the first processor 106.

It will also be appreciated that, while the methods and processes disclosed herein are described with reference to two processors located at the same computing device, the methods and processes disclosed herein are capable of being implemented using any other suitable number of processors (e.g., three or more processors), and such processors could be distributed on any other suitable number of computing devices (e.g., two or more devices). In this manner, some potentially expensive processes (e.g., computer vision algorithms) can be distributed across a plurality of processors or offloaded from the computing device 102.

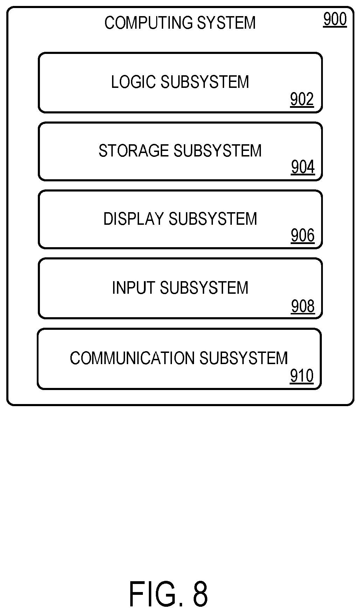

The computing device 102 further comprises a memory 110. In some examples, the memory 110 is accessible only by the first processor 106 and stores instructions executable by the first processor 106 to implement at least a portion of the methods and processes described herein. In these examples the computing device 102 also comprises an additional memory 111 that is accessible only by the second processor 108 and stores instructions executable by the second processor 108 to implement at least a portion of the methods and processes described herein. Accordingly, and in one potential advantage of the present disclosure, the separation of the memory 110 and the additional memory 111 prevents the first processor 106 from accessing potentially private data stored in the additional memory 111 as described further below. Additional aspects of the computing device 102 are described in more detail below with reference to FIG. 8.

The system 100 of FIG. 1 also includes an image sensor 112 and an ambient light sensor 114. The image sensor 112 is configured to output image sensor data 116 to the first processor 106 or the second processor 108. The ambient light sensor 114 is configured to output ambient light data 118 to the first processor 106 and/or the second processor 108.

In the example of FIG. 1, the image sensor 112 and the ambient light sensor 114 are integrated with the computing device 102. In other examples, the image sensor 112 and/or the ambient light sensor 114 are independent of the computing device. In one such example, the image sensor 112 and/or the ambient light sensor 114 are peripheral devices that are connected to the computing device 102.

The image sensor data 116 output by the image sensor 112 has a first image resolution that is higher than a second image resolution of the ambient light data 118 output by the ambient light sensor 114. In some examples, the ambient light sensor 114 comprises fewer pixel sensor units than the image sensor 112, and/or the ambient light sensor 114 averages the outputs of the pixel sensor units over at least a portion of the sensor. In this manner, noise is distributed over an area of the sensor.

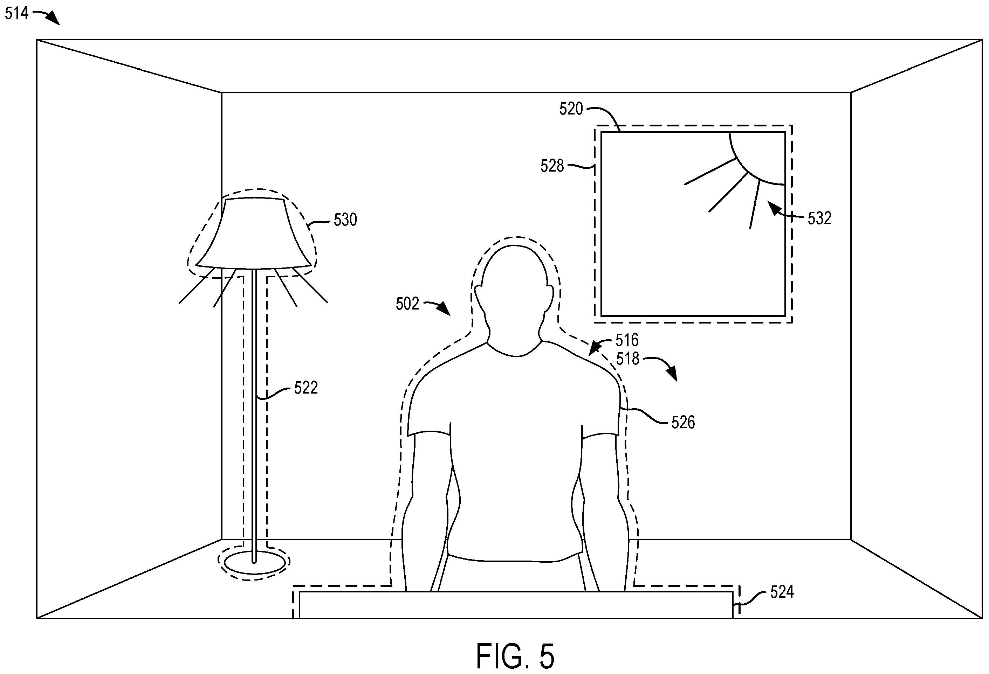

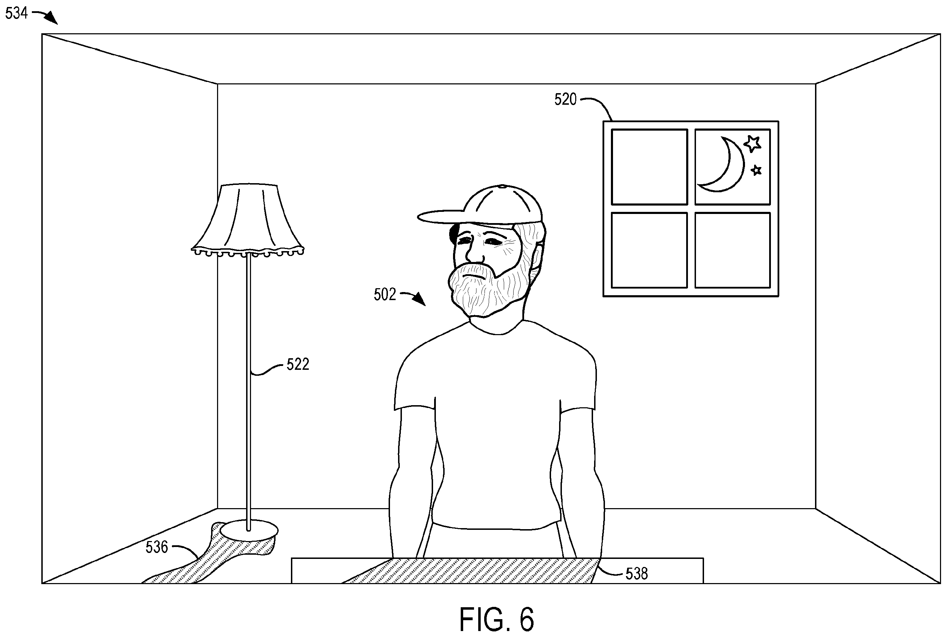

Further, in some examples, the second image resolution is less than a threshold resolution 136 that enables facial recognition. Accordingly, and as described in more detail below with reference to FIGS. 5 and 6, private information, such as human faces in a scene, is not discernable in the ambient light data 118.

In some examples, the ambient light sensor 114 additionally or alternatively includes a filter, such as an infrared filter, a mask, or another material that impedes the passage of light to the ambient light sensor 114. The filter reduces noise via photon diffusion and/or by blocking a potentially noisy spectral range (e.g., IR). The filter also prevents the ambient light sensor 114 from resolving private information, such as human faces.

Compared to the ambient light sensor 114, the image sensor 112 utilizes an optical stack having higher transmissivity and percent transmittance, thereby enabling better color approximation and sensitivity in low light environments, along with lower noise in the image sensor data 116. In addition, and as described in more detail below with reference to FIGS. 5-7, the image sensor 112 enables the use of computer vision techniques to analyze the environment and, for example, determine different aspects of ambient lighting conditions.

In some examples, the image sensor 112 has a larger diode area than the ambient light sensor 114, increasing sensitivity. In this manner, the image sensor 112 may maintain a linear sensor response in low-light conditions (e.g., less than or equal to 100 lux). In some examples, the image sensor 112 exhibits a linear response to light levels greater than or equal to 10 lux. Accordingly, and in one potential advantage of the present disclosure, the image sensor 112 may be used to evaluate ambient lighting conditions in low-light environments.

In some examples, the image sensor 112 has a greater number of color channels than the ambient light sensor 114, enabling the image sensor data 116 to be binned into a greater number of spectral ranges than the ambient light data 118. These additional color channels enable the computing device 102 to estimate a light source type, light intensity, and light color. Such additional information, as well as the greater sensitivity and resolution of the image sensor 112 relative to the ambient light sensor 114, enables the computing device to accurately determine ambient light conditions using a combination of the image sensor data 116 and the ambient light data 118.

As described in more detail below, and in one potential advantage of the present disclosure, the image sensor data 116 and the ambient light data 118 are used to execute a color adjustment algorithm 120 and a brightness adjustment algorithm 122, while also preventing the higher-resolution image sensor data from being available to the first processor 106 to thereby protect user privacy. Advantageously and as described further below, by utilizing the higher-resolution image sensor data 116 along with the ambient light data 118, the color adjustment algorithm 120 and brightness adjustment algorithm 122 can provide more accurate color and brightness adjustments that are more closely tailored to the particular ambient light conditions of a user's environment.

The color adjustment algorithm 120 is configured to use at least the image sensor data 116 and the ambient light data 118 to adjust one or more color parameters 124 of content 126 displayed on the display 104. The display 104 is configured to output any suitable type of content. Some examples of suitable content include, but are not limited to, an image 128 and text 130. The one or more color parameters 124 include any suitable color parameters. Some examples of suitable color parameters include, but are not limited to, color space values, such as red, green, and blue (RGB) display values. In one potential advantage of the present disclosure, the one or more color parameters 124 are adjusted to value(s) that allow a user to accurately perceive a color of the content.

The brightness adjustment algorithm 122 is configured to use at least the image sensor data 116 and the ambient light data 118 to adjust a luminance 132 of the display 104. In this manner, the luminance 132 of the display 104 is adjusted to a level that allows a user to accurately perceive brightness and contrast in the content 126. It will also be appreciated that, while the brightness adjustment algorithm 122 and the color adjustment algorithm 120 are depicted as separated algorithms in FIG. 1, in other examples, the brightness adjustment algorithm 122 and the color adjustment algorithm 120 are implemented as a single algorithm.

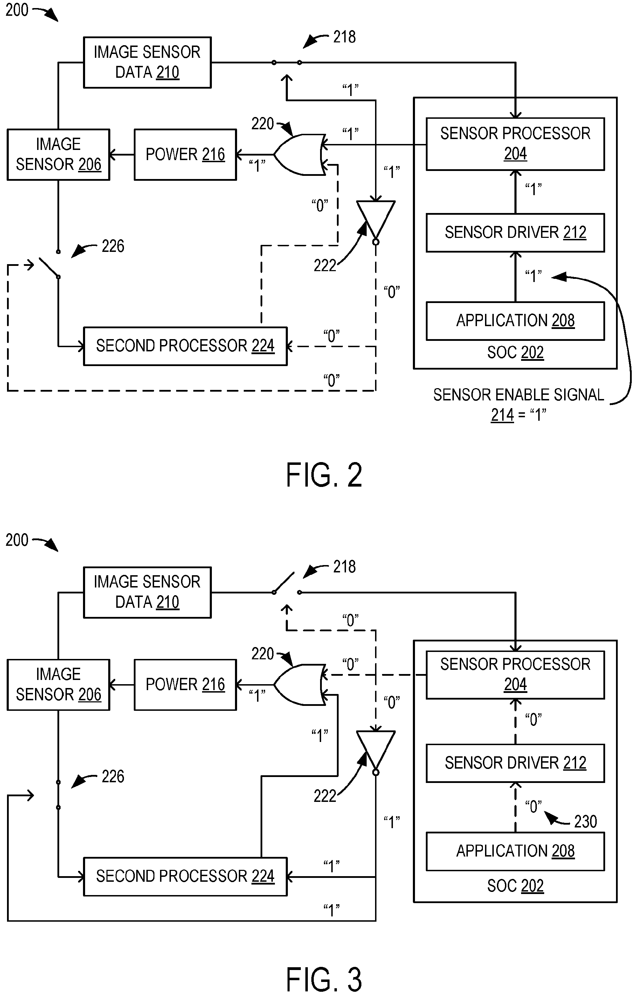

In some examples, the color adjustment algorithm 120 and the brightness adjustment algorithm 122 are executed at the first processor 106. As described in more detail below with reference to FIGS. 2-4, the computing device 102 is configured to detect whether the image sensor 112 is in use by an application 134 executed at the first processor 106, such as a camera application, a video conferencing application, or an augmented reality (AR) application. On condition that the image sensor is in use by the application 134, the image sensor data 116 is routed to at least the first processor 106, where it is used in combination with the ambient light data 118 to execute the color adjustment algorithm 120 and the brightness adjustment algorithm 122. Privacy concerns may be mitigated when the image sensor 112 is in use by the application 134, as the computing device 102 may notify the user that the image sensor 112 is active (such as by illuminating an indicator light), and/or the first processor 106 may have already been granted permission to receive the image sensor data 116 for the purpose of executing the application 134.

FIGS. 2-3 show a schematic diagram of an example system 200 for routing image sensor data as introduced above. The system 200 comprises a SoC 202 that includes a sensor processor 204. In some examples, the SoC 202 can serve as the first processor 106 of FIG. 1. The computing system also includes a second processor 224 and image sensor 206, which can serve as second processor 108 and image sensor 112, respectively, of FIG. 1.

The system 200 is configured to detect whether an image sensor 206 is in use by an application 208 executed at the SoC 202. With reference to FIG. 2, in one example the application 208 requests image sensor data 210 by passing a sensor enable signal 214 to a sensor device driver 212. In some examples, the sensor enable signal 214 comprises a bit that is set to "1". The sensor processor 204 receives the sensor enable signal 214 via the driver 212, and thereby determines that the application 208 is using or is attempting to use the image sensor 206.

Accordingly and as described further below, on condition that the image sensor is in use by the application 208, the sensor processor 204 is configured to route the image sensor data 210 to the SoC 202 and first processor. In this manner, the first processor receives and uses the image sensor data 210 in combination with the ambient light data to execute the color adjustment algorithm 120 and the brightness adjustment algorithm 122 as described above. In this example, the sensor processor 204 routes the image sensor data 210 to the SoC 202 by passing the sensor enable signal 214 to a power system 216 via OR gate 220. The power system 216 supplies power to the image sensor 206 and thereby causes the image sensor 206 to activate and output the image sensor data 210. The sensor enable signal 214 further causes a first switch 218 to close, enabling the image sensor data 210 to reach the sensor processor 204. It will also be appreciated that access to the image sensor data 210 may be subject to additional conditions, such as permissions and user consent, to protect user privacy.

In some examples, when the image sensor data is routed to the sensor processor 204, the image sensor data is blocked from the second processor. In the present example, the sensor enable signal 214 also passes to a NOT gate 222, which flips the bit from "1" to "0" and passes the "0" to second processor 224 (which can serve as the second processor 108 of FIG. 1). The flipped sensor enable signal also causes a second switch 226 to open, blocking the image sensor data 210 from the second processor 224. Accordingly, and in one potential technical advantage of the present disclosure, blocking the image sensor data 210 from the second processor 224 may prevent the second processor 224 from consuming excessive power.

With reference again to FIG. 1, in other examples, the color adjustment algorithm 120 and the brightness adjustment algorithm 122 are executed at the second processor 108. In some examples, when the image sensor 112 is in use by the application 134, the first processor 106 is configured to cause the second processor 108 to execute the color adjustment algorithm 120 and the brightness adjustment algorithm 122. In this manner, the execution of the color adjustment algorithm 120 and the brightness adjustment algorithm 122 are offloaded from the first processor 106 to preserve computational resources of the first processor.

With reference again to FIG. 1, and in one potential advantage of the present disclosure, on condition that the image sensor is not in use by the application, the computing device 102 is configured to block the image sensor data 116 from the first processor 106, and to route the image sensor data to the second processor 108 to thereby enable the second processor to use at least the image sensor data and the ambient light data to execute the color adjustment algorithm 120 and the brightness adjustment algorithm 122. In this manner, the first processor 106 is prevented from receiving potentially private information from the image sensor data 116. In some examples, output of the image sensor data 116 from image sensor 206 to the first processor 106 is blocked.

As shown in FIG. 3, the sensor processor 204 is configured to determine that the image sensor 206 is not in use by the application 208 when the sensor processor 204 does not receive the sensor enable signal 214 of FIG. 2. In some examples, the sensor processor 204 determines that the image sensor 206 is not in use by receiving a sensor disable signal 230 from the application 208. In the example of FIG. 3, the sensor disable signal 230 comprises a bit that is set to "0". The sensor disable signal 230 causes the first switch 218 to open and the second switch 226 to close, thereby blocking the image sensor data 210 from the SoC 202 and routing the image sensor data 210 to the second processor 224. Advantageously and in this manner, the second processor 224 is configured to receive the image sensor data for further processing, while the image sensor data is blocked from the first processor.

In the example of FIG. 3, to power the image sensor 206 the disable signal 230 is passed to the NOT gate 222 which flips the bit from "0" to "1" and passes the "1" to second processor 224. The second processor 224 routes the "1" to the power system 216 via OR gate 220, thereby activating the image sensor 206 and routing the image sensor data 210 to the second processor.

As shown in FIGS. 2-3, the image sensor 206 can be powered whether the image sensor data 210 is in use by the application 208 or not. More particularly, the OR gate 220 is configured to output an enable signal of "1" to the power system 216 on condition of receiving an input bit set to "1" from the sensor processor 204 or the second processor 224. In this manner, the image sensor data 210 may be available to the system 200 whether the image sensor data 210 is in use by the application 208 or not.

With reference again to FIG. 1, in some examples, the second processor 108 is configured to, on condition that the image sensor is not in use by the application, receive the image sensor data 116 at a resolution that is less than the threshold resolution 136 that enables facial recognition. In some examples, the performance of the image sensor 112 is downgraded from a high-performance mode 138 to a low-power mode 140 when the image sensor 112 is not in use by the application 134 to reduce the resolution of the image sensor data 116 to be less than the threshold resolution.

For example, the image sensor 112 is configured to use a high-performance image capture mode 138 when the image sensor data 116 is in use by the application 134. In the high-performance image capture mode 138, the image sensor 112 is configured to output image sensor data 116 at a higher resolution and/or frame rate than in the low-power image capture mode 140. In this manner, the image sensor data 116 has a suitable resolution or frame rate for the application 134.

Additionally, the image sensor 112 is configured to use the low-power image capture mode 140 when the image sensor data 116 is not in use by the application. The image sensor 112 may consume less power by operating at a lower resolution and/or frame rate than in the high-performance image capture mode 138. In addition, operating at a lower resolution and/or frame rate further prevents potentially private information, such as human faces, from being discernable in the image sensor data 116.

In other examples, high-resolution image sensor data is downsampled to the resolution that is less than the threshold resolution 136. Accordingly, and in one potential advantage of the present disclosure, downsampling may remove at least some identifiable features (e.g., human faces) from the high-resolution image data.

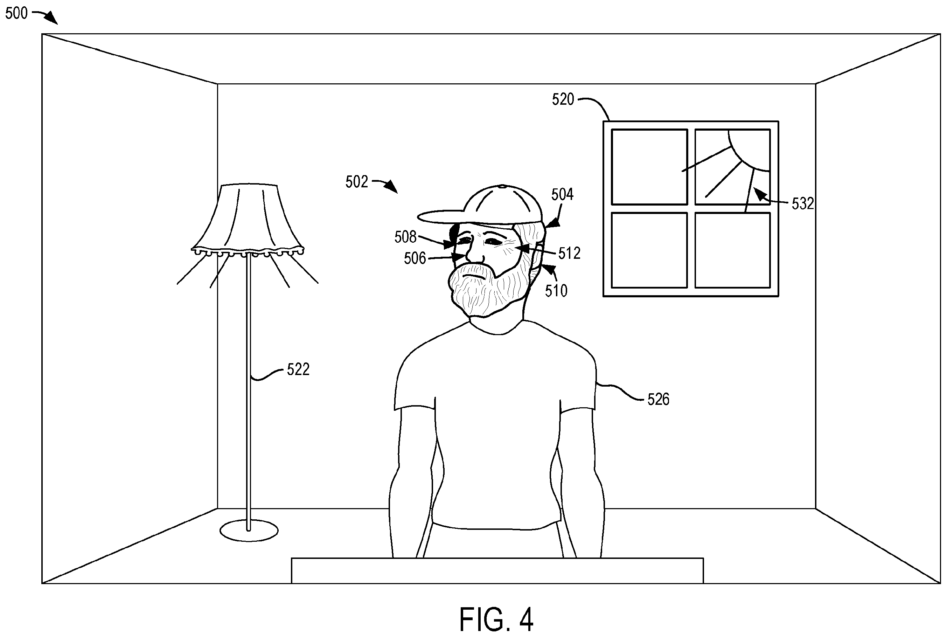

FIGS. 4-6 show examples of image sensor data that can be used in the system 100 of FIG. 1 and/or the system 200 of FIGS. 2-3. In FIG. 4, the image sensor data comprises a first image 500 of a user 502. The image 500 can serve as the image sensor data 116 of FIG. 1 and/or the image sensor data 210 of FIGS. 2-3.

The image 500 has a first resolution that enables recognition of a plurality of facial features of the user 502, such as hair 504, nose 506, eyes 508, ears 510, and fine facial structure 512. Such a detailed depiction of the user can be advantageous for some applications, such as a camera application, a video conferencing application, or facial recognition applications.

FIG. 5 shows a second image 514 of the user 502. The second image 514 has a lower resolution than the first image 500 of FIG. 4 and thus includes fewer discernable details than the first image 500. For example, the presence of a human is discernable (e.g., a silhouette or outline of the user 102), but personal identifiers such as the user's facial features 504-512 are not discernable. In another potential advantage of the present disclosure, the low-resolution image 514 enables spatial information, such as the user's presence and position and the presence and identity of other objects in the scene, to be identified and used in the execution of the color adjustment algorithm 120 and/or the brightness adjustment algorithm 122 of FIG. 1 without passing recognizable details of the user to a processor.

As described in more detail below, the additional information that can be gleaned from the image sensor data allows the identification of pixels that are relevant to the color adjustment algorithm and/or the brightness adjustment algorithm, which are incorporated as an additional input to the color adjustment algorithm and/or the brightness adjustment algorithm along with the ambient light data. The relevant and/or irrelevant pixels in the image sensor data are additionally or alternatively used to compensate for noise in the ambient light data, which can increase the reliability of the algorithmic outputs relative to using the ambient light data alone.

In some examples, and with reference again to FIG. 1, the computing device 102 is configured to segment a plurality of background pixels from the image sensor data and use the background pixels to execute the color adjustment algorithm and the brightness adjustment algorithm. In some examples the segmentation is performed at the first processor 106, the second processor 108, one or more additional processors, or a combination thereof. Further, the segmentation and the execution of the color adjustment algorithm and/or the brightness adjustment algorithm may be performed at the same processor or at different processors.

In a prophetic example of a use-case scenario, a computer vision algorithm 141 is used to identify the presence of a human (e.g., the user 502) in the image 514 of FIG. 5. A segmentation algorithm is then used to segment the image 514 into at least a foreground area 516 (including the user 502) and a background area 518. In some examples, the background area 518 is more relevant for the color adjustment algorithm and/or the brightness adjustment algorithm than the foreground area 516. For example, ambient light sources, such as window 520 and lamp 522, are located in the background area 518. In contrast, the foreground area 516 merely includes the user 502 and a table 524, which are not sources of ambient light. Accordingly, in these examples pixels in the background area 518 are provided as input to a color adjustment algorithm and/or a brightness adjustment algorithm. The pixels in the foreground area 516 are not used in the input, excluding potential sources of noise.

In some examples, the locations of the one or more pixels in the background area 518 are used to select relevant pixels in the ambient light data that correspond to the same real-world location. Correspondingly, other locations are used to exclude other pixels that are potential sources of noise. The relevant pixels in the ambient light data and/or the background pixels are provided as input to the color adjustment algorithm and/or the brightness adjustment algorithm.

In other examples, the ambient light data is additionally or alternatively adjusted to fit the image sensor data. For example, the ambient light data 118 of FIG. 1 may be adjusted in any suitable manner to correspond to the image sensor data 116. Some examples of suitable adjustments include scaling, adding, subtracting, or smoothing the ambient light data 118. For example and as described further below, the ambient light data may be adjusted by subtracting a light intensity attributed to the one or more foreground pixels of FIG. 5 to correct for potential error.

In some examples, the computing device 102 is configured to segment one or more pixels that correspond to a reflective object from the image sensor data and use the one or more pixels that correspond to the reflective object to account for non-ambient light reflected by the reflective object. In some examples, the segmentation of the reflective object is performed at the first processor 106, the second processor 108, one or more additional processors, or a combination thereof. Further, the segmentation and the execution of the color adjustment algorithm and/or the brightness adjustment algorithm may be performed at the same processor or at different processors.

With reference again to FIG. 5, in some examples, a shirt 526 worn by the user 502 reflects light in a spectral range (e.g., 520-560 nm) that overlaps with a sensitivity range of an ambient light sensor. Accordingly, an ambient light sensor receiving such reflected light could output an inaccurate measurement of the ambient light in this environment. To address this potential issue, and in a prophetic example of a use-case scenario, the computing device 102 utilizes a computer vision algorithm 141 to identify the shirt 526 as a reflective object and segment pixels that correspond to the shirt 526 from the image 514. In some examples, the pixels that correspond to the shirt 526 and/or pixels in the ambient light data that correspond to the shirt are excluded from use by the color adjustment algorithm and/or the brightness adjustment algorithm. In other examples, the pixels that correspond to the shirt 526 are used to adjust the ambient light data to compensate for light reflected by the shirt 526.

In some examples, the computing device 102 of FIG.1 is configured to segment one or more pixels that correspond to a light source from the image data and use at least the one or more pixels that correspond to the light source to execute the color adjustment algorithm and the brightness adjustment algorithm. In some examples, as described above, the segmentation is performed at the first processor 106, the second processor 108, one or more additional processors, or a combination thereof. Further, the segmentation and the execution of the color adjustment algorithm and/or the brightness adjustment algorithm may be performed at the same processor or at different processors.

With reference again to FIG. 5, in a prophetic example of a use-case scenario, the computing device 102 utilizes a computer vision algorithm 141 to identify the window 520 and segment an area 528 corresponding to the window from the image 514. As another example, the computer vision algorithm 141 may identify the lamp 522 and segment an area 530 corresponding to the lamp from the image 514. The window 520 and/or the lamp 522 may be sources of ambient light, and thus serve as an accurate indication of ambient lighting conditions in the image 514. For example, sunlight 532 illuminating the room via the window 520 may be rich in IR light, which can be erroneously measured by an ambient light sensor as visible light. Accordingly, and in one potential advantage of the present disclosure, one or more pixels in an area corresponding to a light source may be used to identify the light source and adjust the ambient light data accordingly.

With reference again to FIG. 1, in some examples, the computing device 102 is additionally or alternatively configured to use the image sensor data to detect a low light condition 142 or a mixed light condition 144. FIG. 6 shows an example of an image 534 captured under low light conditions (e.g., less than 100 lux) at night. Shadows are present in the image 534, including a shadow 536 cast by the lamp 522 and a shadow 538 cast by the user 502. Under these conditions, the use of an ambient light sensor could result in inaccurate brightness and color adjustments. Advantageously, and in another potential advantage of the present disclosure, the image sensor data 116 of FIG. 1 can be used to identify the low light conditions and augment ambient light data with image sensor data and/or compensate for the shadows.

The image 500 of FIG. 4 and the image 514 of FIG. 5 represent examples of mixed light conditions, in which the lamp 522 is powered on and sunlight 532 is entering through the window 520. The lamp 522 and the sunlight 532 may have different intensities and spectra, which can lead to erroneous color and brightness determinations. Advantageously and as described above, the image sensor data 116 of FIG. 1 can be used to identify the light sources (e.g., sunlight and the lamp) and adjust one or more color parameters 124 and/or the luminance 132 accordingly.

With reference again to FIG. 1, in some examples, the computing device 102 is configured to receive environmental context data 146 and use the environmental context data to adjust the one or more color parameters and/or adjust the luminance of the display. In some examples, the environmental context data 146 is received from the computing device 102. In other examples, the environmental context data 146 is received from one or more computing devices independent of the computing device 102. Some examples of suitable environmental context data include, but are not limited to, a time, a date, a location, and weather conditions. As a prophetic example of a use-case scenario, the computing device 102 determines that the image 534 of FIG. 6 is captured in low light conditions based upon a time, a date, and/or a location that the image was taken (e.g., 7 PM on December 21, 2021 in Alaska). Similarly, in some examples, the lighting conditions are estimated based upon weather conditions (e.g., cloudy or sunny). In this manner, the computing device 102 can utilize such environmental context data to adjust the one or more color parameters 124 and/or the luminance 132 to allow the user to accurately perceive displayed content in the received environmental conditions.

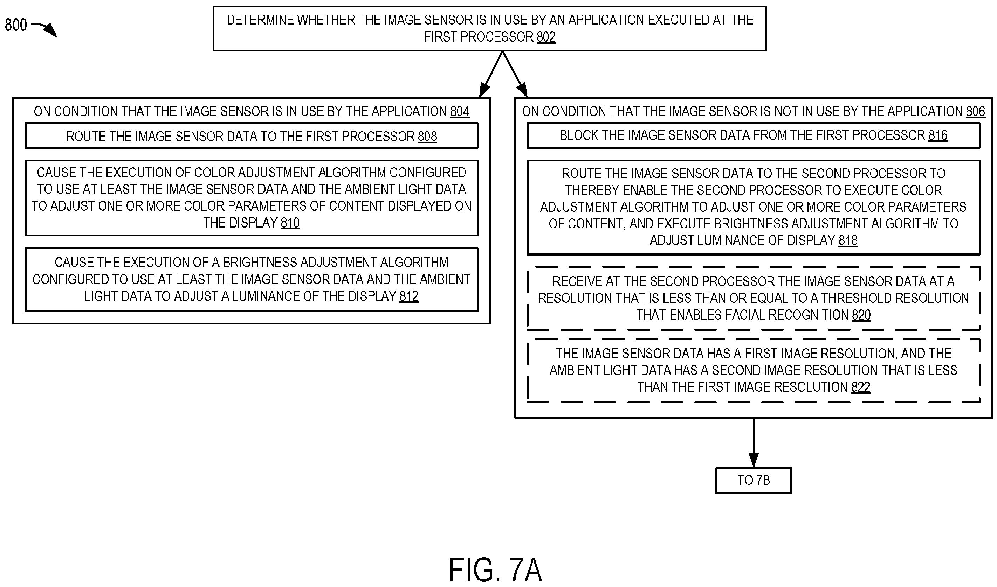

With reference now to FIGS. 7A-7B, a flow diagram is provided depicting an example method 800 for adjusting one or more color parameters of an image displayed on a display and adjusting a luminance of the display. The following description of method 800 is provided with reference to the systems, computing devices, and components described herein and shown in FIGS. 1-6 and 8. In some examples, the method 800 is performed at the computing device 102 of FIG. 1 or the system 200 of FIGS. 2-3. In other examples, the method 800 is performed in other contexts using other suitable components.

At 802 of FIG. 7A, the method 800 includes determining whether the image sensor is in use by an application executed at the first processor. For example, the sensor processor 204 of FIG. 2 is configured to detect whether the image sensor 206 is in use by the application 208 executed at the SoC 202. On condition that the image sensor is in use by the application, the method 800 proceeds to 804. On condition that the image sensor is not in use by the application, the method 800 proceeds to 806.

On condition that the image sensor is in use by the application, at 808 the method 800 includes routing the image sensor data to the first processor. For example, the image sensor data 116 of FIG. 1 is routed to the first processor 106. In the system 200 of FIG. 2, the image sensor data 210 is routed to at least the sensor processor 204. In this manner, the image sensor data is made available for use at the first processor. Here, privacy concerns may be mitigated, as the computing device 102 can notify the user that the image sensor is active (such as by illuminating an indicator light), and/or the first processor already may have been granted permission to receive the image sensor data for the purpose of executing the application.

At 810, the method 800 includes causing execution of a color adjustment algorithm at the first processor to use at least the image sensor data and the ambient light data to adjust one or more color parameters of content displayed on the display. The method 800 also includes, at 812, causing execution of a brightness adjustment algorithm at the first processor to use at least the image sensor data and the ambient light data to adjust a luminance of the display. In this manner, the higher resolution image sensor data is utilized to adjust one or more color parameters to value(s) that allow a user to accurately perceive a color of the content, and adjust the luminance 132 of the display 104 to a level that allows a user to accurately perceive brightness and contrast in the content 126.

In some examples and as noted above, the first processor 106 of FIG. 1 is configured to cause the second processor 108 to execute the color adjustment algorithm 120 and the brightness adjustment algorithm 122. In this manner, the execution of the color adjustment algorithm 120 and the brightness adjustment algorithm 122 are offloaded from the first processor 106.

With reference now to 806, and on condition that the image sensor is not in use by the application, at 816 the method 800 includes blocking the image sensor data from the first processor. For example, the computing device 102 is configured to block the image sensor data 116 from the first processor 106, and the system 200 is configured to block the image sensor data 210 from the sensor processor 204. In this manner, the first processor is prevented from receiving potentially private information from the image sensor data. At 818, the method 800 includes routing the image sensor data to the second processor to thereby enable the second processor to execute the color adjustment algorithm to use at least the image sensor data and the ambient light data to adjust one or more color parameters of content displayed on the display, and execute the brightness adjustment algorithm to use at least the image sensor data and the ambient light data to adjust a luminance of the display. For example, the image sensor data 116 of FIG. 1 is routed to the second processor 108, which executes the color adjustment algorithm 120 and the brightness adjustment algorithm 122. The image sensor data 210 of FIG. 2 is also routed to the second processor 224. In this manner, the second processor is configured to receive the image sensor data for further processing while the image sensor data is blocked from the first processor.

At 820, the method 800 may include, on condition that the image sensor is not in use by the application, receiving the image sensor data at a resolution that is less than a threshold resolution that enables facial recognition. In some examples, the image sensor 112 of FIG. 1 is downgraded from a high-performance mode 138 to a low-power mode 140 when the image sensor 112 is not in use by the application 134 to reduce the resolution of the image sensor data 116 to be less than the threshold resolution. In other examples, high-resolution image sensor data is downsampled. In this manner, potentially private information, such as human faces, is not discernable in the image sensor data.

At 822, the image sensor data may have a first image resolution, and the ambient light data may have a second image resolution that is less than the first image resolution. For example, the ambient light sensor 114 of FIG. 1 may comprise fewer pixel sensor units than the image sensor 112, and/or average the outputs of the pixel sensor units over at least a portion of the sensor. In this manner, noise is averaged out over an area of the sensor. In some examples, the second image resolution is also less than the threshold resolution 136 that enables facial recognition, preventing private information from being discernable in the ambient light sensor data.

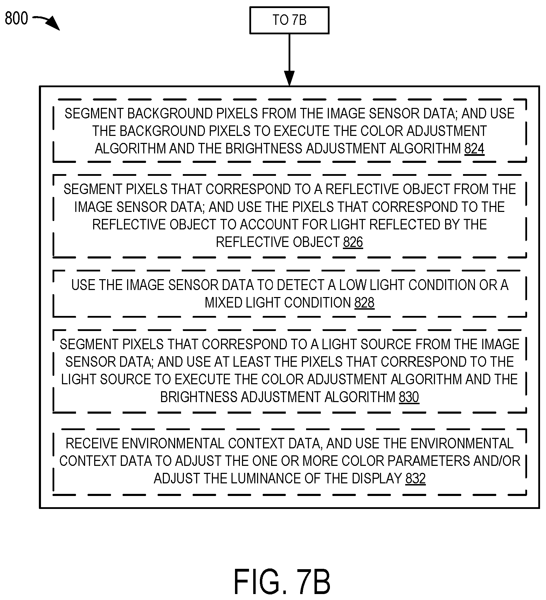

With reference now to FIG. 7B, at 824, the method 800 may include segmenting background pixels from the image sensor data; and using the background pixels to execute the color adjustment algorithm and the brightness adjustment algorithm. For example, pixels in the background area 518 are segmented from the image 514 of FIG. 5 and provided as input to the color adjustment algorithm and/or the brightness adjustment algorithm. In some examples, the background area 518 is more relevant than the foreground area for these algorithms, resulting in a more accurate determination of ambient lighting conditions and excluding the foreground area as a potential source of noise.

At 826, the method 800 may include segmenting pixels that correspond to a reflective object from the image sensor data; and using the pixels that correspond to the reflective object to account for light reflected by the reflective object. For example, pixels that correspond to the shirt 526 of FIG. 5 are used to adjust the ambient light data to compensate for light reflected by the shirt 526, controlling for reflections from the shirt 526 as a potential source of error.

At 828, the method 800 may include using the image sensor data to detect a low light condition or a mixed light condition. For example, image sensor data can be used to identify the low light conditions depicted in FIG. 6 and the mixed lighting conditions depicted in FIGS. 4 and 5. In some examples, in low lighting conditions, the ambient light data is augmented with image sensor data. The image sensor data is additionally or alternatively used to compensate for the presence of shadows. In other examples, in mixed lighting conditions, the image sensor data is used to identify light sources and adjust the one or more color parameters of displayed content and/or the luminance of the display accordingly.

At 830, the method 800 may include segmenting pixels that correspond to a light source from the image sensor data; and using at least the pixels that correspond to the light source to execute the color adjustment algorithm and the brightness adjustment algorithm. For example, an area 530 corresponding to the lamp 522 of FIG. 5 and an area 528 corresponding to the window 520 are segmented from the image 514. In this manner, pixels in the area 528 and/or the area 530 are used to adjust the one or more color parameters of displayed content and/or the luminance of the display to account for the spectral signature and intensity of the light sources. At 832, the method 800 may include receiving environmental context data, and using the environmental context data to adjust the one or more color parameters and/or adjust the luminance of the display.

In some embodiments, the methods and processes described herein may be tied to a computing system of one or more computing devices. In particular, such methods and processes may be implemented as a computer-application program or service, an application-programming interface (API), a library, and/or other computer-program product.

FIG. 8 schematically shows a non-limiting embodiment of a computing system 900 that can enact one or more of the examples described above. For example, computing system 900 can be used to execute instructions to perform the method 800 of FIGS. 7A-7B and/or potentially perform other functions.

Computing system 900 is shown in simplified form. Computing system 900 can take the form of one or more personal computers, server computers, tablet computers, network computing devices, mobile computing devices, mobile communication devices (e.g., smart phone), wearable computing devices, and/or other computing devices. In some examples, the computing device 102 of FIG. 1 and/or the system 200 of FIGS. 2-3 comprise one or more aspects of the computing system 900.

Computing system 900 includes a logic subsystem 902, a storage subsystem 904, and a display subsystem 906. Computing system 900 can optionally include an input subsystem 908, a communication subsystem 910, and/or other components not shown in FIG. 8.

Logic subsystem 902 includes one or more physical devices configured to execute instructions. For example, logic subsystem 902 can be configured to execute instructions that are part of one or more applications, services, programs, routines, libraries, objects, components, data structures, or other logical constructs. Such instructions can be implemented to perform a task, implement a data type, transform the state of one or more components, achieve a technical effect, or otherwise arrive at a desired result. For example, logic subsystem 902 can be used to execute instructions to perform the method 800 of FIGS. 7A-7B.

Logic subsystem 902 can include one or more processors configured to execute software instructions. Additionally or alternatively, logic subsystem 902 can include one or more hardware or firmware logic machines configured to execute hardware or firmware instructions. Processors of logic subsystem 902 can be single-core or multicore, and the instructions executed thereon can be configured for sequential, parallel, and/or distributed processing. Individual components of logic subsystem 902 optionally can be distributed among two or more separate devices, which can be remotely located and/or configured for coordinated processing. Aspects of logic subsystem 902 can be virtualized and executed by remotely accessible, networked computing devices configured in a cloud-computing configuration.

Storage subsystem 904 includes one or more physical devices configured to hold instructions executable by logic subsystem 902 to implement the methods and processes described herein. For example, storage subsystem 904 can hold instructions executable to perform the method 800 of FIGS. 7A-7B, and/or potentially perform other functions. When such methods and processes are implemented, the state of storage subsystem 904 can be transformed-e.g., to hold different data.

Storage subsystem 904 can include removable and/or built-in devices. Storage subsystem 904 can include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage subsystem 904 can include volatile, nonvolatile, dynamic, static, read/write, read-only, random-access, sequential-access, location-addressable, file-addressable, and/or content-addressable devices.

It will be appreciated that storage subsystem 904 includes one or more physical devices. However, aspects of the instructions described herein alternatively may be propagated by a communication medium (e.g., an electromagnetic signal, an optical signal, etc.) that is not held by a physical device for a finite duration.

Aspects of logic subsystem 902 and storage subsystem 904 can be integrated together into one or more hardware-logic components. Such hardware-logic components can include field-programmable gate arrays (FPGAs), program- and application-specific integrated circuits (PASIC / ASICs), program- and application-specific standard products (PSSP / ASSPs), SoCs, and complex programmable logic devices (CPLDs), for example.

The terms "program" and "application" may be used to describe an aspect of computing system 900 implemented to perform a particular function. In some cases, a program or application may be instantiated via logic subsystem 902 executing instructions held by storage subsystem 904. It will be understood that different programs and applications may be instantiated from the same service, code block, object, library, routine, API, function, etc. Likewise, the same program or application may be instantiated by different services, code blocks, objects, routines, APIs, functions, etc. The terms "program" and "application" may encompass individual or groups of executable files, data files, libraries, drivers, scripts, database records, etc.

It will be appreciated that a "service", as used herein, is an application executable across multiple user sessions. A service may be available to one or more system components, programs, and/or other services. In some implementations, a service may run on one or more server-computing devices.

When included, display subsystem 906 can be used to present a visual representation of data held by storage subsystem 904. This visual representation can take the form of a graphical user interface (GUI). As the herein described methods and processes change the data held by the storage subsystem 904, and thus transform the state of the storage machine, the state of display subsystem 906 can likewise be transformed to visually represent changes in the underlying data. For example, display subsystem 906 can be configured to display the content 126 of FIG. 1.

Display subsystem 906 can include one or more display devices utilizing virtually any type of technology. Such display devices can be combined with logic subsystem 902 and/or storage subsystem 904 in a shared enclosure, or such display devices can be peripheral display devices.

When included, input subsystem 908 can comprise or interface with one or more user-input devices such as a keyboard, mouse, touch screen, or joystick. In some embodiments, the input subsystem 908 can comprise or interface with selected natural user input (NUI) componentry. Such componentry can be integrated or peripheral, and the transduction and/or processing of input actions can be handled on- or off-board. Example NUI componentry can include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity. For example, input subsystem 908 can be configured to receive user inputs while performing the method 800 and/or displaying the content 126.

When included, communication subsystem 910 can be configured to communicatively couple computing system 900 with one or more other computing devices. Communication subsystem 910 can include wired and/or wireless communication devices compatible with one or more different communication protocols. As non-limiting examples, the communication subsystem can be configured for communication via a wireless telephone network, or a wired or wireless local- or wide-area network. In some embodiments, communication subsystem 910 can allow computing system 900 to send and/or receive messages to and/or from other devices via a network such as the Internet. For example, communication subsystem 910 can be used receive or send data to another computing system. As another example, communication subsystem may be used to communicate with other computing systems during execution of method 800 in a distributed computing environment.

The following paragraphs provide additional support for the claims of the subject application. One aspect provides a system, comprising: a display; a first processor; a second processor, an image sensor configured to output image sensor data to the first processor or the second processor; an ambient light sensor configured to output ambient light data to the first processor and/or the second processor; and a memory storing instructions executable by the first processor to: determine that the image sensor is not in use by an application executed at the first processor; and on condition that the image sensor is not in use by the application: block the image sensor data from the first processor; and route the image sensor data to the second processor to thereby enable the second processor to execute a color adjustment algorithm configured to use at least the image sensor data and the ambient light data to adjust one or more color parameters of content displayed on the display, and execute a brightness adjustment algorithm configured to use at least the image sensor data and the ambient light data to adjust a luminance of the display. The instructions may be additionally or alternatively executable to determine that the image sensor is in use by the application executed at the first processor; and on condition that the image sensor is in use by the application: route the image sensor data to the first processor; cause execution of the color adjustment algorithm at the first processor to use at least the image sensor data and the ambient light data to adjust one or more color parameters of content displayed on the display; and cause execution of the brightness adjustment algorithm at the first processor to use at least the image sensor data and the ambient light data to adjust a luminance of the display. The image sensor data may additionally or alternatively have a first image resolution, and the ambient light data may additionally or alternatively have a second image resolution that is less than the first image resolution. The instructions may be additionally or alternatively executable by the second processor to segment background pixels from the image sensor data; and use the background pixels to execute the color adjustment algorithm and the brightness adjustment algorithm. The instructions may be additionally or alternatively executable by the second processor to segment pixels that correspond to a reflective object from the image sensor data; and use the pixels that correspond to the reflective object to account for light reflected by the reflective object. The instructions may be additionally or alternatively executable by the second processor to use the image sensor data to detect a low light condition or a mixed light condition. The instructions may be additionally or alternatively executable by the second processor to segment pixels that correspond to a light source from the image sensor data; and use at least the pixels that correspond to the light source to execute the color adjustment algorithm and the brightness adjustment algorithm. The instructions may be additionally or alternatively executable by the second processor to receive environmental context data; and use the environmental context data to adjust the one or more color parameters and/or adjust the luminance of the display. The instructions may be additionally or alternatively executable by the second processor to, on condition that the image sensor is not in use by the application, receive the image sensor data at a resolution that is less than a threshold resolution that enables facial recognition.

Another aspect provides, at a computing device comprising a display, a first processor, a second processor, an image sensor configured to output image sensor data to the first processor or the second processor, and an ambient light sensor configured to output ambient light data to the first processor and/or the second processor, a method for adjusting one or more color parameters of an image displayed on the display and adjusting a luminance of the display, the method comprising: determining that the image sensor is not in use by an application executed at the first processor; and on condition that the image sensor is not in use by the application: blocking the image sensor data from the first processor, and routing the image sensor data to the second processor to thereby enable the second processor to execute a color adjustment algorithm configured to use at least the image sensor data and the ambient light data to adjust one or more color parameters of content displayed on the display, and execute a brightness adjustment algorithm configured to use at least the image sensor data and the ambient light data to adjust a luminance of the display. The method may additionally or alternatively include determining that the image sensor is in use by the application executed at the first processor; and on condition that the image sensor is in use by the application: routing the image sensor data to the first processor; causing execution of the color adjustment algorithm at the first processor to use at least the image sensor data and the ambient light data to adjust one or more color parameters of content displayed on the display; and causing execution of the brightness adjustment algorithm at the first processor to use at least the image sensor data and the ambient light data to adjust a luminance of the display. The method may additionally or alternatively include, wherein the image sensor data has a first image resolution, and wherein the ambient light data has a second image resolution that is less than the first image resolution. The method may additionally or alternatively include segmenting background pixels from the image sensor data; and using the background pixels to execute the color adjustment algorithm and the brightness adjustment algorithm. The method may additionally or alternatively include segmenting pixels that correspond to a reflective object from the image sensor data; and using the pixels that correspond to the reflective object to account for light reflected by the reflective object. The method may additionally or alternatively include using the image sensor data to detect a low light condition or a mixed light condition. The method may additionally or alternatively include segmenting pixels that correspond to a light source from the image sensor data; and using at least the pixels that correspond to the light source to execute the color adjustment algorithm and the brightness adjustment algorithm. The method may additionally or alternatively include receiving environmental context data; and using the environmental context data to adjust the one or more color parameters and/or adjust the luminance of the display. The method may additionally or alternatively include, on condition that the image sensor is not in use by the application, receiving at the second processor the image sensor data at a resolution that is less than a threshold resolution that enables facial recognition.

Another aspect provides a computing device, comprising: a display; a first processor; a second processor; an image sensor configured to output image sensor data to the first processor or the second processor, wherein the image sensor data has a first image resolution; an ambient light sensor configured to output ambient light data to the first processor and/or the second processor, wherein the ambient light data has a second image resolution less than the first image resolution, and wherein the second image resolution is less than a threshold resolution that enables facial recognition; and a memory storing instructions executable by the first processor to, detect whether the image sensor is in use by an application executed at the first processor, on condition that the image sensor is in use by the application, route the image sensor data to the first processor, cause execution of a color adjustment algorithm configured to use at least the image sensor data and the ambient light data to adjust one or more color parameters of content displayed on the display, and cause execution of a brightness adjustment algorithm configured to use at least the image sensor data and the ambient light data to adjust a luminance of the display; and on condition that the image sensor is not in use by the application, block the image sensor data from the first processor, and route the image sensor data to the second processor at a third image resolution that is less than the threshold resolution to thereby enable the second processor to use at least the image sensor data and the ambient light data to execute the color adjustment algorithm and the brightness adjustment algorithm. The instructions may be additionally or alternatively executable by the second processor to: segment background pixels from the image sensor data; and use the background pixels to execute the color adjustment algorithm and the brightness adjustment algorithm.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed. However, these specific embodiments or examples which are not covered by the claims do not form part of the present invention that is solely defined by the claims.

## Claims

1. A system, comprising:
a display (104);
a first processor (106);
a second processor (108);
an image sensor (112) configured to output image sensor data to the first processor or the second processor;
an ambient light sensor (114) configured to output ambient light data (118) to the first processor and/or the second processor; and
a memory storing instructions executable by the first processor to:
determine that the image sensor (112) is not in use by an application executed at the first processor; and
on condition that the image sensor (112) is not in use by the application:
block the image sensor data (116) from the first processor (106); and
route the image sensor data (116) to the second processor (108) to thereby enable the second processor (108) to execute a color adjustment algorithm (120) configured to use at least the image sensor data and the ambient light data to adjust one or more color parameters of content displayed on the display, and execute a brightness adjustment algorithm (122) configured to use at least the image sensor data and the ambient light data to adjust a luminance (132) of the display (104).

2. The system of claim 1, wherein the instructions are further executable to:
determine that the image sensor (112) is in use by the application executed at the first processor; and
on condition that the image sensor (112) is in use by the application:
route the image sensor data to the first processor (106);
cause execution of the color adjustment algorithm (120) at the first processor (106) to use at least the image sensor data (116) and the ambient light data to adjust one or more color parameters of content displayed on the display; and
cause execution of the brightness adjustment algorithm (122) at the first processor (106) to use at least the image sensor data and the ambient light data to adjust a luminance (132) of the display (104).

3. The system of any preceding claim, further comprising instructions executable by the second processor to:
segment pixels that correspond to a reflective object from the image sensor data (116); and use the pixels that correspond to the reflective object to account for light reflected by the reflective object.

4. The system of any preceding claim, further comprising instructions executable by the second processor (108) to use the image sensor data (116) to detect a low light condition or a mixed light condition.

5. The system of any preceding claim, further comprising instructions executable by the second processor (108) to:
segment pixels that correspond to a light source from the image sensor data (116); and use at least the pixels that correspond to the light source to execute the color adjustment algorithm and the brightness adjustment algorithm.

6. The system of any preceding claim, further comprising instructions executable by the second processor (108) according to one or more of the following to:
(i) receive environmental context data; and use the environmental context data to adjust the one or more color parameters and/or adjust the luminance (132) of the display (104);
(ii) on condition that the image sensor (112) is not in use by the application, receive the image sensor data (116) at a resolution that is less than a threshold resolution that enables facial recognition.

7. At a computing device comprising a display (104), a first processor (106), a second processor (108), an image sensor (112) configured to output image sensor data (116) to the first processor (106) or the second processor (108), and an ambient light sensor (114) configured to output ambient light data (118) to the first processor (106) and/or the second processor (108), a method for adjusting one or more color parameters of an image displayed on the display (104) and adjusting a luminance (132) of the display (104), the method comprising:
determining that the image sensor (112) is not in use by an application executed at the first processor; and
on condition that the image sensor (112) is not in use by the application:
blocking the image sensor data (116) from the first processor (106), and
routing the image sensor data (116) to the second processor (108) to thereby enable the second processor (108) to execute a color adjustment algorithm (120) configured to use at least the image sensor data (116) and the ambient light data (118) to adjust one or more color parameters (124) of content (126) displayed on the display (104), and execute a brightness adjustment algorithm (122) configured to use at least the image sensor data (116) and the ambient light data (118) to adjust a luminance (132) of the display (104).

8. The method of claim 7, further comprising:
determining that the image sensor (112) is in use by the application executed at the first processor (106); and
on condition that the image sensor (112) is in use by the application:
routing the image sensor data (116) to the first processor (106);
causing execution of the color adjustment algorithm (120) at the first processor (106) to use at least the image sensor data (116) and the ambient light data (118) to adjust one or more color parameters (124) of content (126) displayed on the display (104); and
causing execution of the brightness adjustment algorithm (122) at the first processor (106) to use at least the image sensor data (116) and the ambient light data (118) to adjust a luminance (132) of the display (104).

9. The system of claim 1 or 2 or method of claim 7 or 8, wherein the image sensor data (116) has a first image resolution, and wherein the ambient light data (118) has a second image resolution that is less than the first image resolution.

10. The method of any one of claims 7 to 9, further comprising one or more of the following:
(i) segmenting background pixels from the image sensor data (116); and using the background pixels to execute the color adjustment algorithm (120) and the brightness adjustment algorithm (122);
(ii) segmenting pixels that correspond to a reflective object from the image sensor data (116); and using the pixels that correspond to the reflective object to account for light reflected by the reflective object;
(iii) using the image sensor data (116) to detect a low light condition or a mixed light condition.

11. The method of any one of claims 7-10, further comprising:
segmenting pixels that correspond to a light source from the image sensor data (116); and using at least the pixels that correspond to the light source to execute the color adjustment algorithm (120) and the brightness adjustment algorithm (122).

12. The method of any one of claims 7-11, further comprising:
receiving environmental context data; and
using the environmental context data to adjust the one or more color parameters and/or adjust the luminance (132) of the display (104).

13. The method of any one of claims 7-12, further comprising, on condition that the image sensor (112) is not in use by the application, receiving at the second processor (108) the image sensor data (116) at a resolution that is less than a threshold resolution that enables facial recognition.

14. A computing device, comprising:
a display (104);
a first processor (106);
a second processor (108);
an image sensor (112) configured to output image sensor data (116) to the first processor (106) or the second processor (108), wherein the image sensor data (116) has a first image resolution;
an ambient light sensor (114) configured to output ambient light data (118) to the first processor (106) and/or the second processor (108), wherein the ambient light data (118) has a second image resolution less than the first image resolution, and wherein the second image resolution is less than a threshold resolution that enables facial recognition; and
a memory storing instructions executable by the first processor (106) to,
detect whether the image sensor (112) is in use by an application executed at the first processor,
on condition that the image sensor (112) is in use by the application,
route the image sensor data (116) to the first processor (106),
cause execution of a color adjustment algorithm (120) configured to use at least the image sensor data (116) and the ambient light data (118) to adjust one or more color parameters of content (126) displayed on the display (104), and
cause execution of a brightness adjustment algorithm (122) configured to use at least the image sensor data (116) and the ambient light data (118) to adjust a luminance (132) of the display (104); and
on condition that the image sensor (112) is not in use by the application,
block the image sensor data (116) from the first processor (106), and
route the image sensor data (116) to the second processor (108) at a third image resolution that is less than the threshold resolution to thereby enable the second processor (108) to use at least the image sensor data (116) and the ambient light data (118) to execute the color adjustment algorithm (120) and the brightness adjustment algorithm (122).

15. The system of any one of claims 1, 2 or 9, or the computing device of claim 14, further comprising instructions executable by the second processor (108) to:
segment background pixels from the image sensor data (116); and
use the background pixels to execute the color adjustment algorithm (120) and the brightness adjustment algorithm (122).

## Patentansprüche

1. Ein System, beinhaltend:
eine Anzeige (104);
einen ersten Prozessor (106);
einen zweiten Prozessor (108);
einen Bildsensor (112), der konfiguriert ist, um Bildsensordaten an den ersten Prozessor oder den zweiten Prozessor auszugeben;
einen Umgebungslichtsensor (114), der konfiguriert ist, um Umgebungslichtdaten (118) an den ersten Prozessor und/oder den zweiten Prozessor auszugeben; und
einen Speicher, der Anweisungen speichert, die durch den ersten Prozessor für Folgendes ausführbar sind:
Bestimmen, dass der Bildsensor (112) durch eine Anwendung, die an dem ersten Prozessor ausgeführt wird, nicht verwendet wird; und
unter der Bedingung, dass der Bildsensor (112) durch die Anwendung nicht verwendet wird:
Blockieren der Bildsensordaten (116) gegenüber dem ersten Prozessor (106); und
Leiten der Bildsensordaten (116) an den zweiten Prozessor (108), um dadurch dem zweiten Prozessor (108) zu ermöglichen, einen Farbanpassungsalgorithmus (120) auszuführen, der konfiguriert ist, um mindestens die Bildsensordaten und die Umgebungslichtdaten zu verwenden, um einen oder mehrere Farbparameter von Inhalten, die auf der Anzeige angezeigt werden, anzupassen, und einen Helligkeitsanpassungsalgorithmus (122) auszuführen, der konfiguriert ist, um mindestens die Bildsensordaten und die Umgebungslichtdaten zu verwenden, um eine Leuchtdichte (132) der Anzeige (104) anzupassen.

2. System gemäß Anspruch 1, wobei die Anweisungen ferner für Folgendes ausführbar sind:
Bestimmen, dass der Bildsensor (112) durch die Anwendung, die an dem ersten Prozessor ausgeführt wird, verwendet wird; und
unter der Bedingung, dass der Bildsensor (112) durch die Anwendung verwendet wird:
Leiten der Bildsensordaten an den ersten Prozessor (106);
Bewirken der Ausführung des Farbanpassungsalgorithmus (120) an dem ersten Prozessor (106), um mindestens die Bildsensordaten (116) und die Umgebungslichtdaten zu verwenden, um einen oder mehrere Farbparameter von Inhalten, die auf der Anzeige angezeigt werden, anzupassen; und
Bewirken der Ausführung des Helligkeitsanpassungsalgorithmus (122) an dem ersten Prozessor (106), um mindestens die Bildsensordaten und die Umgebungslichtdaten zu verwenden, um eine Leuchtdichte (132) der Anzeige (104) anzupassen.

3. System gemäß einem der vorhergehenden Ansprüche, ferner beinhaltend Anweisungen, die durch den zweiten Prozessor für Folgendes ausführbar sind: Segmentieren von Pixeln, die einem reflektierenden Objekt entsprechen, von den Bildsensordaten (116); und Verwenden der Pixel, die dem reflektierenden Objekt entsprechen, um Licht, das durch das reflektierende Objekt reflektiert wird, zu berücksichtigen.

4. System gemäß einem der vorhergehenden Ansprüche, ferner beinhaltend Anweisungen, die durch den zweiten Prozessor (108) ausführbar sind, um die Bildsensordaten (116) zu verwenden, um eine schlechte Lichtbedingung oder eine gemischte Lichtbedingung zu detektieren.

5. System gemäß einem der vorhergehenden Ansprüche, ferner beinhaltend Anweisungen, die durch den zweiten Prozessor (108) für Folgendes ausführbar sind: Segmentieren von Pixeln, die einer Lichtquelle entsprechen, von den Bildsensordaten (116); und Verwenden mindestens der Pixel, die der Lichtquelle entsprechen, um den Farbanpassungsalgorithmus und den Helligkeitsanpassungsalgorithmus auszuführen.

6. System gemäß einem der vorhergehenden Ansprüche, ferner beinhaltend Anweisungen, die durch den zweiten Prozessor (108) gemäß einem oder mehreren von Folgendem für Folgendes ausführbar sind:
(i) Empfangen von Umgebungskontextdaten; und Verwenden der Umgebungskontextdaten, um den einen oder die mehreren Farbparameter anzupassen und/oder die Leuchtdichte (132) der Anzeige (104) anzupassen;
(ii) unter der Bedingung, dass der Bildsensor (112) durch die Anwendung nicht verwendet wird, Empfangen der Bildsensordaten (116) mit einer Auflösung, die geringer als eine Schwellenauflösung ist, die Gesichtserkennung ermöglicht.

7. An einer Rechenvorrichtung, die eine Anzeige (104), einen ersten Prozessor (106), einen zweiten Prozessor (108), einen Bildsensor (112), der konfiguriert ist, um Bildsensordaten (116) an den ersten Prozessor (106) oder den zweiten Prozessor (108) auszugeben, und einen Umgebungslichtsensor (114), der konfiguriert ist, um Umgebungslichtdaten (118) an den ersten Prozessor (106) und/oder den zweiten Prozessor (108) auszugeben, beinhaltet, ein Verfahren zum Anpassen eines oder mehrerer Farbparameter eines Bildes, das auf der Anzeige (104) angezeigt wird, und zum Anpassen einer Leuchtdichte (132) der Anzeige (104), wobei das Verfahren Folgendes beinhaltet:
Bestimmen, dass der Bildsensor (112) durch eine Anwendung, die an dem ersten Prozessor ausgeführt wird, nicht verwendet wird; und
unter der Bedingung, dass der Bildsensor (112) durch die Anwendung nicht verwendet wird:
Blockieren der Bildsensordaten (116) gegenüber dem ersten Prozessor (106) und Leiten der Bildsensordaten (116) an den zweiten Prozessor (108), um dadurch dem zweiten Prozessor (108) zu ermöglichen, einen Farbanpassungsalgorithmus (120) auszuführen, der konfiguriert ist, um mindestens die Bildsensordaten (116) und die Umgebungslichtdaten (118) zu verwenden, um einen oder mehrere Farbparameter (124) von Inhalten (126), die auf der Anzeige (104) angezeigt werden, anzupassen, und einen Helligkeitsanpassungsalgorithmus (122) auszuführen, der konfiguriert ist, um mindestens die Bildsensordaten (116) und die Umgebungslichtdaten (118) zu verwenden, um eine Leuchtdichte (132) der Anzeige (104) anzupassen.

8. Verfahren gemäß Anspruch 7, ferner beinhaltend:
Bestimmen, dass der Bildsensor (112) durch die Anwendung, die an dem ersten Prozessor (106) ausgeführt wird, verwendet wird; und
unter der Bedingung, dass der Bildsensor (112) durch die Anwendung verwendet wird:
Leiten der Bildsensordaten (116) an den ersten Prozessor (106);
Bewirken der Ausführung des Farbanpassungsalgorithmus (120) an dem ersten Prozessor (106), um mindestens die Bildsensordaten (116) und die Umgebungslichtdaten (118) zu verwenden, um einen oder mehrere Farbparameter (124) von Inhalten (126), die auf der Anzeige (104) angezeigt werden, anzupassen; und
Bewirken der Ausführung des Helligkeitsanpassungsalgorithmus (122) an dem ersten Prozessor (106), um mindestens die Bildsensordaten (116) und die Umgebungslichtdaten (118) zu verwenden, um eine Leuchtdichte (132) der Anzeige (104) anzupassen.

9. System gemäß Anspruch 1 oder 2 oder Verfahren gemäß Anspruch 7 oder 8, wobei die Bildsensordaten (116) eine erste Bildauflösung aufweisen und wobei die Umgebungslichtdaten (118) eine zweite Bildauflösung aufweisen, die geringer als die erste Bildauflösung ist.

10. Verfahren gemäß einem der Ansprüche 7 bis 9, ferner beinhaltend eines oder mehrere von Folgendem:
(i) Segmentieren von Hintergrundpixeln von den Bildsensordaten (116); und Verwenden der Hintergrundpixel, um den Farbanpassungsalgorithmus (120) und den Helligkeitsanpassungsalgorithmus (122) auszuführen;
(ii) Segmentieren von Pixeln, die einem reflektierenden Objekt entsprechen, von den Bildsensordaten (116); und Verwenden der Pixel, die dem reflektierenden Objekt entsprechen, um Licht, das durch das reflektierende Objekt reflektiert wird, zu berücksichtigen;
(iii) Verwenden der Bildsensordaten (116), um eine schlechte Lichtbedingung oder eine gemischte Lichtbedingung zu detektieren.

11. Verfahren gemäß einem der Ansprüche 7-10, ferner beinhaltend:
Segmentieren von Pixeln, die einer Lichtquelle entsprechen, von den Bildsensordaten (116); und Verwenden mindestens der Pixel, die der Lichtquelle entsprechen, um den Farbanpassungsalgorithmus (120) und den Helligkeitsanpassungsalgorithmus (122) auszuführen.

12. Verfahren gemäß einem der Ansprüche 7-11, ferner beinhaltend:
Empfangen von Umgebungskontextdaten; und
Verwenden der Umgebungskontextdaten, um den einen oder die mehreren Farbparameter anzupassen und/oder die Leuchtdichte (132) der Anzeige (104) anzupassen.

13. Verfahren gemäß einem der Ansprüche 7-12, ferner beinhaltend, unter der Bedingung, dass der Bildsensor (112) durch die Anwendung nicht verwendet wird, das Empfangen, an dem zweiten Prozessor (108), der Bildsensordaten (116) mit einer Auflösung, die geringer als eine Schwellenauflösung ist, die Gesichtserkennung ermöglicht.

14. Eine Rechenvorrichtung, beinhaltend:
eine Anzeige (104);
einen ersten Prozessor (106);
einen zweiten Prozessor (108);
einen Bildsensor (112), der konfiguriert ist, um Bildsensordaten (116) an den ersten Prozessor (106) oder den zweiten Prozessor (108) auszugeben, wobei die Bildsensordaten (116) eine erste Bildauflösung aufweisen;
einen Umgebungslichtsensor (114), der konfiguriert ist, um Umgebungslichtdaten (118) an den ersten Prozessor (106) und/oder den zweiten Prozessor (108) auszugeben, wobei die Umgebungslichtdaten (118) eine zweite Bildauflösung aufweisen, die geringer als die erste Bildauflösung ist, und wobei die zweite Bildauflösung geringer als eine Schwellenauflösung ist, die Gesichtserkennung ermöglicht; und
einen Speicher, der Anweisungen speichert, die durch den ersten Prozessor (106) für Folgendes ausführbar sind,
Detektieren, ob der Bildsensor (112) durch eine Anwendung, die an dem ersten Prozessor ausgeführt wird, verwendet wird,
unter der Bedingung, dass der Bildsensor (112) durch die Anwendung verwendet wird,
Leiten der Bildsensordaten (116) an den ersten Prozessor (106), Bewirken der Ausführung eines Farbanpassungsalgorithmus (120), der konfiguriert ist, um mindestens die Bildsensordaten (116) und die Umgebungslichtdaten (118) zu verwenden, um einen oder mehrere Farbparameter von Inhalten (126), die auf der Anzeige (104) angezeigt werden, anzupassen, und
Bewirken der Ausführung eines Helligkeitsanpassungsalgorithmus (122), der konfiguriert ist, um mindestens die Bildsensordaten (116) und die Umgebungslichtdaten (118) zu verwenden, um eine Leuchtdichte (132) der Anzeige (104) anzupassen; und
unter der Bedingung, dass der Bildsensor (112) durch die Anwendung nicht verwendet wird,
Blockieren der Bildsensordaten (116) gegenüber dem ersten Prozessor (106) und
Leiten der Bildsensordaten (116) an den zweiten Prozessor (108) mit einer dritten Bildauflösung, die geringer als die Schwellenauflösung ist, um dadurch dem zweiten Prozessor (108) zu ermöglichen, mindestens die Bildsensordaten (116) und die Umgebungslichtdaten (118) zu verwenden, um den Farbanpassungsalgorithmus (120) und den Helligkeitsanpassungsalgorithmus (122) auszuführen.

15. System gemäß einem der Ansprüche 1, 2 oder 9 oder Rechenvorrichtung gemäß Anspruch 14, ferner beinhaltend Anweisungen, die durch den zweiten Prozessor (108) für Folgendes ausführbar sind:
Segmentieren von Hintergrundpixeln von den Bildsensordaten (116); und
Verwenden der Hintergrundpixel, um den Farbanpassungsalgorithmus (120) und den Helligkeitsanpassungsalgorithmus (122) auszuführen.

## Revendications

1. Un système, comprenant :
une unité d'affichage (104) ;
un premier processeur (106) ;
un deuxième processeur (108) ;
un capteur d'image (112) configuré pour délivrer des données de capteur d'image au premier processeur ou au deuxième processeur ;
un capteur de lumière ambiante (114) configuré pour délivrer des données de lumière ambiante (118) au premier processeur et/ou au deuxième processeur ; et
une mémoire stockant des instructions exécutables par le premier processeur pour :
déterminer que le capteur d'image (112) n'est pas en cours d'utilisation par une application exécutée au niveau du premier processeur ; et
à condition que le capteur d'image (112) ne soit pas en cours d'utilisation par l'application :
bloquer l'accès du premier processeur (106) aux données de capteur d'image (116) ; et
acheminer les données de capteur d'image (116) vers le deuxième processeur (108) pour ainsi permettre au deuxième processeur (108) d'exécuter un algorithme de réglage de couleur (120) configuré pour utiliser au moins les données de capteur d'image et les données de lumière ambiante pour régler un ou plusieurs paramètres de couleur de contenu affiché sur l'unité d'affichage, et d'exécuter un algorithme de réglage de luminosité (122) configuré pour utiliser au moins les données de capteur d'image et les données de lumière ambiante pour régler une luminance (132) de l'unité d'affichage (104).

2. Le système de la revendication 1, dans lequel les instructions sont en outre exécutables pour :
déterminer que le capteur d'image (112) est en cours d'utilisation par l'application exécutée au niveau du premier processeur ; et
à condition que le capteur d'image (112) soit en cours d'utilisation par l'application :
acheminer les données de capteur d'image vers le premier processeur (106) ;
provoquer l'exécution de l'algorithme de réglage de couleur (120) au niveau du premier processeur (106) afin d'utiliser au moins les données de capteur d'image (116) et les données de lumière ambiante pour régler un ou plusieurs paramètres de couleur de contenu affiché sur l'unité d'affichage ; et
provoquer l'exécution de l'algorithme de réglage de luminosité (122) au niveau du premier processeur (106) afin d'utiliser au moins les données de capteur d'image et les données de lumière ambiante pour régler une luminance (132) de l'unité d'affichage (104).

3. Le système de n'importe quelle revendication précédente, comprenant en outre des instructions exécutables par le deuxième processeur pour :
obtenir, par segmentation des données de capteur d'image (116), des pixels qui correspondent à un objet réfléchissant ; et utiliser les pixels qui correspondent à l'objet réfléchissant pour tenir compte de la lumière réfléchie par l'objet réfléchissant.

4. Le système de n'importe quelle revendication précédente, comprenant en outre des instructions exécutables par le deuxième processeur (108) pour utiliser les données de capteur d'image (116) pour détecter une situation de faible lumière ou une situation de lumière mixte.

5. Le système de n'importe quelle revendication précédente, comprenant en outre des instructions exécutables par le deuxième processeur (108) pour :
obtenir, par segmentation des données de capteur d'image (116), des pixels qui correspondent à une source de lumière ; et utiliser au moins les pixels qui correspondent à la source de lumière pour exécuter l'algorithme de réglage de couleur et l'algorithme de réglage de luminosité.

6. Le système de n'importe quelle revendication précédente, comprenant en outre des instructions exécutables par le deuxième processeur (108) conformément à une ou plusieurs des options suivantes pour :
(i) recevoir des données de contexte environnemental ; et utiliser les données de contexte environnemental pour régler les un ou plusieurs paramètres de couleur et/ou régler la luminance (132) de l'unité d'affichage (104) ;
(ii) à condition que le capteur d'image (112) ne soit pas en cours d'utilisation par l'application, recevoir les données de capteur d'image (116) à une résolution qui est inférieure à une résolution seuil qui permet la reconnaissance faciale.

7. Au niveau d'un dispositif informatique comprenant une unité d'affichage (104), un premier processeur (106), un deuxième processeur (108), un capteur d'image (112) configuré pour délivrer des données de capteur d'image (116) au premier processeur (106) ou au deuxième processeur (108), et un capteur de lumière ambiante (114) configuré pour délivrer des données de lumière ambiante (118) au premier processeur (106) et/ou au deuxième processeur (108), un procédé pour le réglage d'un ou de plusieurs paramètres de couleur d'une image affichée sur l'unité d'affichage (104) et le réglage d'une luminance (132) de l'unité d'affichage (104), le procédé comprenant :
la détermination du fait que le capteur d'image (112) n'est pas en cours d'utilisation par une application exécutée au niveau du premier processeur ; et
à condition que le capteur d'image (112) ne soit pas en cours d'utilisation par l'application :
le blocage de l'accès du premier processeur (106) aux données de capteur d'image (116) ; et
l'acheminement des données de capteur d'image (116) vers le deuxième processeur (108) pour ainsi permettre au deuxième processeur (108) d'exécuter un algorithme de réglage de couleur (120) configuré pour utiliser au moins les données de capteur d'image (116) et les données de lumière ambiante (118) pour régler un ou plusieurs paramètres de couleur (124) de contenu (126) affiché sur l'unité d'affichage (104), et d'exécuter un algorithme de réglage de luminosité (122) configuré pour utiliser au moins les données de capteur d'image (116) et les données de lumière ambiante (118) pour régler une luminance (132) de l'unité d'affichage (104).

8. Le procédé de la revendication 7, comprenant en outre :
la détermination du fait que le capteur d'image (112) est en cours d'utilisation par l'application exécutée au niveau du premier processeur (106) ; et
à condition que le capteur d'image (112) soit en cours d'utilisation par l'application :
l'acheminement des données de capteur d'image (116) vers le premier processeur (106) ;
la provocation de l'exécution de l'algorithme de réglage de couleur (120) au niveau du premier processeur (106) afin d'utiliser au moins les données de capteur d'image (116) et les données de lumière ambiante (118) pour régler un ou plusieurs paramètres de couleur (124) de contenu (126) affiché sur l'unité d'affichage (104) ; et
la provocation de l'exécution de l'algorithme de réglage de luminosité (122) au niveau du premier processeur (106) afin d'utiliser au moins les données de capteur d'image (116) et les données de lumière ambiante (118) pour régler une luminance (132) de l'unité d'affichage (104).

9. Le système de la revendication 1 ou de la revendication 2 ou le procédé de la revendication 7 ou de la revendication 8, dans lesquels les données de capteur d'image (116) ont une première résolution d'image, et dans lesquels les données de lumière ambiante (118) ont une deuxième résolution d'image qui est inférieure à la première résolution d'image.

10. Le procédé de l'une quelconque des revendications 7 à 9, comprenant en outre une ou plusieurs des opérations suivantes :
(i) l'obtention, par segmentation des données de capteur d'image (116), de pixels d'arrière-plan ; et l'utilisation des pixels d'arrière-plan pour exécuter l'algorithme de réglage de couleur (120) et l'algorithme de réglage de luminosité (122) ;
(ii) l'obtention, par segmentation des données de capteur d'image (116), de pixels qui correspondent à un objet réfléchissant ; et l'utilisation des pixels qui correspondent à l'objet réfléchissant pour tenir compte de la lumière réfléchie par l'objet réfléchissant ;
(iii) l'utilisation des données de capteur d'image (116) pour détecter une situation de faible lumière ou une situation de lumière mixte.

11. Le procédé de l'une quelconque des revendications 7 à 10, comprenant en outre :
l'obtention, par segmentation des données de capteur d'image (116), de pixels qui correspondent à une source de lumière ; et l'utilisation au moins des pixels qui correspondent à la source de lumière pour exécuter l'algorithme de réglage de couleur (120) et l'algorithme de réglage de luminosité (122).

12. Le procédé de l'une quelconque des revendications 7 à 11, comprenant en outre :
la réception de données de contexte environnemental ; et
l'utilisation des données de contexte environnemental pour régler les un ou plusieurs paramètres de couleur et/ou régler la luminance (132) de l'unité d'affichage (104).

13. Le procédé de l'une quelconque des revendications 7 à 12, comprenant en outre, à condition que le capteur d'image (112) ne soit pas en cours d'utilisation par l'application, la réception au niveau du deuxième processeur (108) des données de capteur d'image (116) à une résolution qui est inférieure à une résolution seuil qui permet la reconnaissance faciale.

14. Un dispositif informatique, comprenant :
une unité d'affichage (104) ;
un premier processeur (106) ;
un deuxième processeur (108) ;
un capteur d'image (112) configuré pour délivrer des données de capteur d'image (116) au premier processeur (106) ou au deuxième processeur (108), les données de capteur d'image (116) ayant une première résolution d'image ;
un capteur de lumière ambiante (114) configuré pour délivrer des données de lumière ambiante (118) au premier processeur (106) et/ou au deuxième processeur (108), les données de lumière ambiante (118) ayant une deuxième résolution d'image inférieure à la première résolution d'image, et la deuxième résolution d'image étant inférieure à une résolution seuil qui permet la reconnaissance faciale ; et
une mémoire stockant des instructions exécutables par le premier processeur (106) pour,
détecter si le capteur d'image (112) est en cours d'utilisation par une application exécutée au niveau du premier processeur,
à condition que le capteur d'image (112) soit en cours d'utilisation par l'application,
acheminer les données de capteur d'image (116) vers le premier processeur (106),
provoquer l'exécution d'un algorithme de réglage de couleur (120) configuré pour utiliser au moins les données de capteur d'image (116) et les données de lumière ambiante (118) pour régler un ou plusieurs paramètres de couleur de contenu (126) affiché sur l'unité d'affichage (104), et
provoquer l'exécution d'un algorithme de réglage de luminosité (122) configuré pour utiliser au moins les données de capteur d'image (116) et les données de lumière ambiante (118) pour régler une luminance (132) de l'unité d'affichage (104) ; et
à condition que le capteur d'image (112) ne soit pas en cours d'utilisation par l'application,
bloquer l'accès du premier processeur (106) aux données de capteur d'image (116), et
acheminer les données de capteur d'image (116) vers le deuxième processeur (108) à une troisième résolution d'image qui est inférieure à la résolution seuil pour ainsi permettre au deuxième processeur (108) d'utiliser au moins les données de capteur d'image (116) et les données de lumière ambiante (118) pour exécuter l'algorithme de réglage de couleur (120) et l'algorithme de réglage de luminosité (122).

15. Le système de l'une quelconque des revendications 1, 2 ou 9, ou le dispositif informatique de la revendication 14, comprenant en outre des instructions exécutables par le deuxième processeur (108) pour :
obtenir, par segmentation des données de capteur d'image (116), des pixels d'arrière-plan ; et
utiliser les pixels d'arrière-plan pour exécuter l'algorithme de réglage de couleur (120) et l'algorithme de réglage de luminosité (122).
